# EUROPEAN PATENT SPECIFICATION

(11) **EP 1 741 371 B1**
(45) Date of publication and mention of the grant of the patent: **23.04.2008**
(21) Application number: 05014778.4
(22) Date of filing: 07.07.2005
(51) Int. Cl.: A47J 31/52, A47J 31/06

(54) **Tea-making device with a time control**
Vorrichtung zur Zubereitung von Tee mit Zeitsteuerung
Machine pour la préparation du thé avec contròle de temps

(43) Date of publication of application: 10.01.2007
(73) Proprietor: Yang, Heng-Te, Tainan City (TW)
(72) Inventor: Yang, Heng-Te, Tainan City (TW)
(74) Representative: Volpert, Marcus

(56) References cited:
- EP-A- 1 013 203
- WO-A-99/40830
- DE-A1- 4 433 474
- DE-A1- 10 308 740
- DE-A1- 10 316 937
- DE-C1- 19 910 982
- DE-U1- 9 412 742

## Description

### Field of the Invention:

The present invention relates to tea-making devices with time control capability, and more particularly to a tea-making device with a time control; the time control can be flexibly set so that other components of the tea-making device will work accordingly to separate the tea leaves and the tea soup therein within the preset time. This present invention is to prevent the tea soup from getting bitter due to over-soakage of the tea leaves.

### Background of the Invention:

Drinking tea is essential to many modern people. The time period that tea leaves will be soaked in water is an important factor to making good tea, besides the water temperature. Therefore, tea makers capable of performing swift tea/leaves-soup separation are very popular among modern people. A tea-making device of the prior art comprises a kettle body with a top opening for placing a tea basket. To make tea, the basket is disposed with tea leaves, and then the leaves are poured with hot water. The water will flow into the kettle body until its level exceeds the basket. Eventually, the tea-making device is covered by a top cap. Thereby, the tea leaves can be immersed in the water for a predetermined time, after which the basket is taken from the kettle body and the tea soup will be ready to serve. However, the tea-making device of the prior art has the disadvantage of forgetting the soakage of the leaves in the water and therefore the tea soup will be bitter due to over soakage. Oppositely, there would be a premature departure of the tea leaves from the soup due to an impatient user, making the tea soup tasteless.

### Summary of the Invention:

Accordingly, the primary objective of the present invention is to provide a tea-making device with a time control, whereby tea leaves and tea soup will be separated in a predetermined time, and whereby the problems of bitter soup or tasteless soup can be avoided.

The various objects and advantages of the present invention will be more readily understood from the following detailed description when read in conjunction with the appended drawings.

### Brief Description of the Drawings:

Fig.1 is an exploded perspective view of a tea-making device with a time control according to the present invention.
Fig.2 is another exploded perspective view of the tea-making device in Fig.1.
Fig.3 is a side cross-sectional view of the tea-making device in Fig.1.
Fig.4 is another side cross-sectional view of the tea-making device in Fig.1.
Fig.5 is a perspective view of the tea-making device in Fig.1, wherein the upper half and the lower half are separated.
Fig.6 is a perspective view of the tea-making device in Fig.1, wherein the upper half and the lower half are combined.
Fig.7 is a perspective view of the tea-making device in Fig.1, wherein the tea-making device is opened to place tea leaves.
Fig.8 is a side cross-sectional view of the tea-making device in Fig.1, before the tea leaves are immersed into the hot water.
Fig.9 is a perspective view of the tea-making device in Fig.1, wherein the cup is being shifted downward.
Fig.10 is a side cross-sectional view of the tea-making device in Fig.9.
Fig.11 is a side cross-sectional view of the tea-making device in Fig.1, after the tea leaves are immersed into the hot water.

### Detailed Description of the Invention:

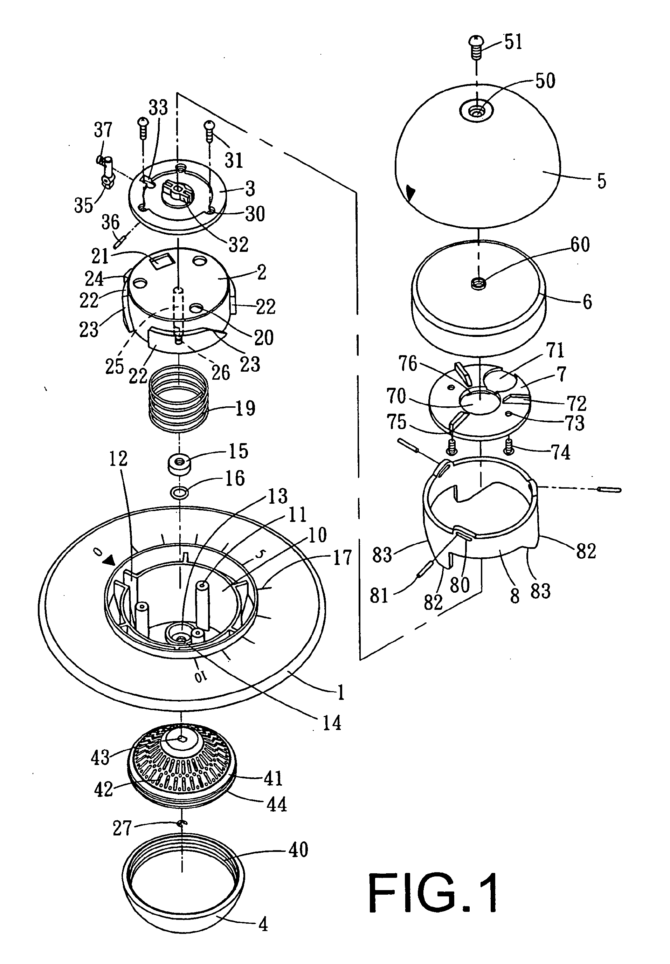

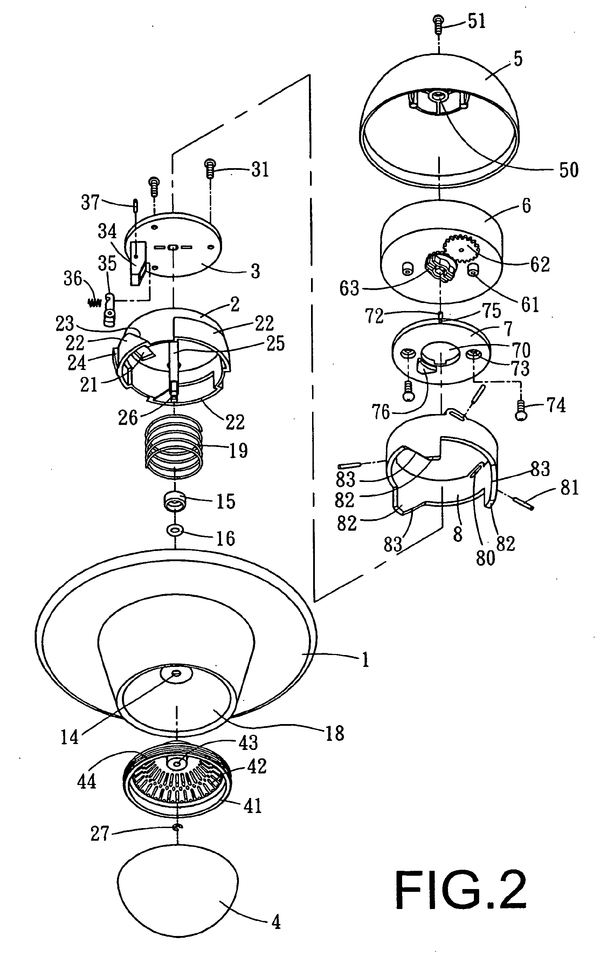

Referring to Figs.1 and 2, a tea-making device with a time control according to the present invention comprises a main body 1, a connecting mount 2, a securing mount 3, a cup 4, an upper cover 5, a timer 6, a driving unit 7 and a movable unit 8. The main body 1 is internally provided with a receptacle 10 which further includes a plurality of retaining columns 11, a lateral slot 12, a bottom cavity 13 and a through hole 14 within the cavity 13. The cavity 13 further comprises a water stopper 15 and an O-ring 16. The top surface of the main body 1 is provided with time calibrations 17, and the other side of the through hole 14 on the main body 1 forms another cavity 18. A spring 19 is disposed in the receptacle 10 for connecting the connecting mount 2.

The connecting mount 2 connected to the receptacle 10 of the main body 1 has a plurality of holes 20 and a through window 21. The connecting mount 2 further includes a plurality of projected guides 22 which are projected blocks formed on the lateral outer wall of the connecting mount 2 each consisting of a sloppy top surface 23 and a projected portion 24. A connecting rod 25 is erected on the bottom surface of the connecting mount 2 toward the main body 1. The lower end of the connecting rod 25 is provided with an annular groove 26 having a retaining ring 27.

The securing mount 3 situates in the receptacle 10 of the main body 1 above the connecting mount 2. The securing mount 3 is provided with a plurality of holes 30 for the passage of a plurality of locking members 31; the locking members 31 are for securing the retaining columns 11 of the main body 1. A locking mount 32 is further provided and located at the central top portion of the securing mount 3. The securing mount 3 further includes a through window 33 and a positioning post 34 extended from the bottom surface of the securing mount 3 toward the connecting mount 2. The positioning post 34 has a securing block 35 that is locked therein using a pivotal axis 36. A spring 37 is located within the through window 33 roughly above the securing block 35.

A cup 4 located below the main body 1 is provided with an inner screw thread 40 on the inner rim thereon and an upper filtering cap 41 having a multitude of through holes 42 for passing water. At the center of the filtering cap 41, there forms a through window 43. The outer rim of the filtering cap 41 is further provided with an outer screw thread 44.

The upper cover 5 is disposed atop the main body 1 having a through hole 50 and a locking member 51 extended along the through hole 50.

The top surface of the timer 6 is provided with a plurality of screwed holes 60, and the bottom of the timer 6 are extended with a plurality of columns 61 for the engagement of another component. The bottom surface of the timer 6 is further equipped with a plurality of transmission gears 62 and an insertion projection 63.

The driving unit 7 is disposed under the timer 6 and is provided with a central hole 70. The top surface of the driving unit 7 is provided with a cavity 71 and a plurality of projected blades 72. The driving unit 7 further includes a plurality of through holes 73 for locking the retaining columns 61 of the timer 6 by a corresponding set of locking members 74. The lateral wall of the driving unit 7 is provided with a plurality of pin slots 75, and the bottom surface of the driving unit 7 has a driving projection 76.

The movable unit 8, coupled with the driving unit 7, is provided with a plurality of retaining through holes 80 for the passage of a corresponding set of pins 81, which pins 81 will be inserted into the pin slots 75. A collection of blades 82 are projected from the bottom of the movable unit 8, each having a sloppy surface 83.

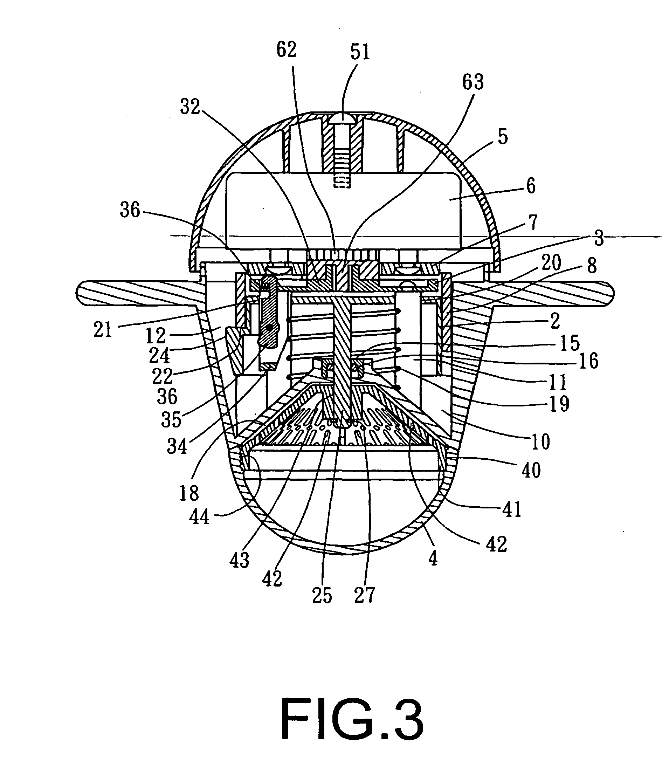

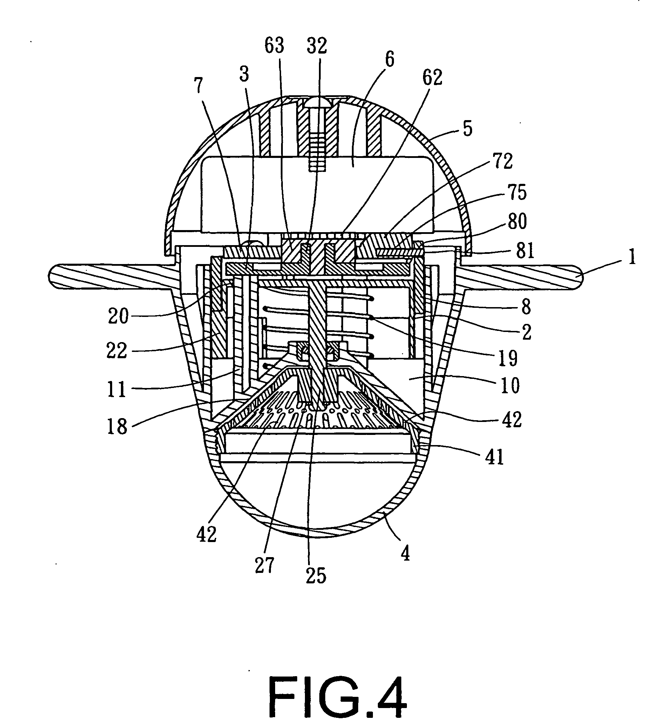

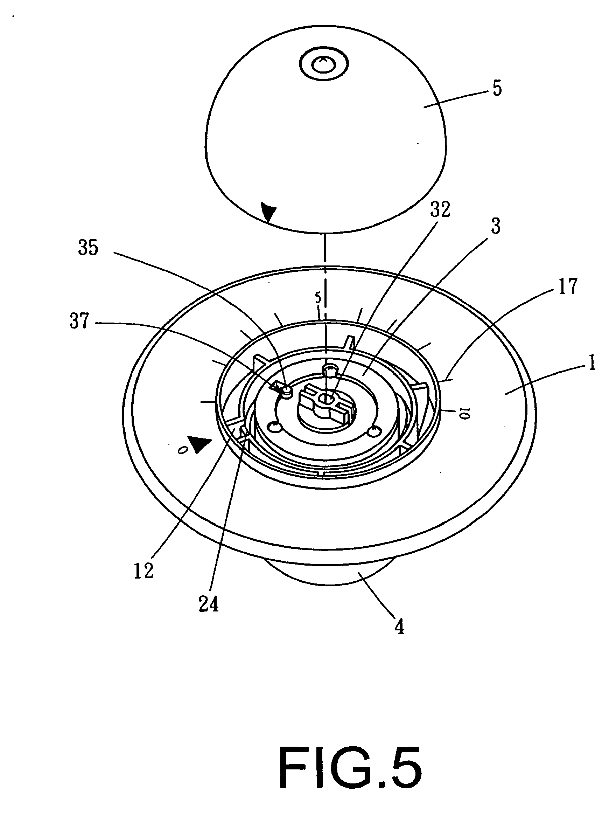

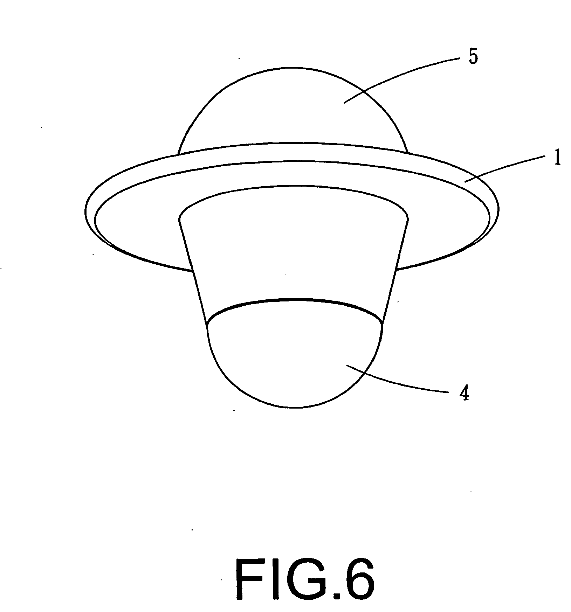

Referring to Figs.1 to 6, the assembly of the tea-making device with a time control begins with installing the water stopper 15 within the receptacle 10 of the main body 1 and placing the spring 19 within the receptacle 10. The connecting mount 2 is placed in the receptacle 10, whereby the retaining columns 11 of the receptacle 10 may go through the holes 20 of the connecting mount 2, and whereby the projected portion 24 of the connecting mount 2 will rest in the slot 12 of the main body 1. Thus, the connecting mount 2 in the receptacle 10 will be secured above the main body 1. The connecting mount 2 will be supported upwardly by the restoring force of the spring 19. The connecting rod 25 of the connecting mount 2 will pass the water stopper 15, the O-ring 16 and the through hole 14. The connecting rod 25 will eventually extend the cavity 18 of the main body 1. The filtering cap 41 is disposed in the cavity 18 of the main body 1, whereby the lower end of the connecting rod 25 will go through the through window 43 of the filtering cap 41. The connection of the connecting rod 25 and the filtering cap 41 is carried out by mounting the retaining ring 27 to the groove 16 of the connecting rod 25. The cup 4 is connected by screwed right beneath the filtering cap 41, and the positioning block 35 thereof is pivotally installed in the positioning post 34 by the pivotal axis 36. At the same time, the spring 37 is disposed within the hole 33 of the securing mount 33, whereby the positioning block 35 will be flexibly supported upwardly. The lower free end of the positioning block 35 is projected into the receptacle 10 of the main body 1, whereby the securing mount 3 will be supported by the retaining columns 11 of the main body 1. The securing mount 3 is locked onto the main body 1 by the locking members 31 on the upper ends of the retaining columns 11. And the positioning post 34 on the bottom of the securing mount 3 will be inserted into the through window 21 of the connecting mount 2. The movable unit 8 will be coupled with the driving unit 7 by inserting a plurality of pins 81 into the pin slots 75 on the driving unit 7. The driving unit 7 is mounted on the bottom of the timer 6, wherein the insertion projection 63 Of the timer 6 will through the hole 70 of the driving unit 7. The timer 6 will be mounted within the upper cover 5 by the locking members 51 after the through hole 50. The blades 82 of the movable unit 8 in the upper cover 5 will be housed in the receptacle 10 of the main body 1, whereby the sloppy surfaces 83 on the blades 82 will be attached to the projected guides 22 on the connecting mount 2. At the same time, the insertion projection 63 of the timer 6 will situate stably in the locking mount 32 of the securing mount 3. This will complete the installation of the tea-making device with a time control.

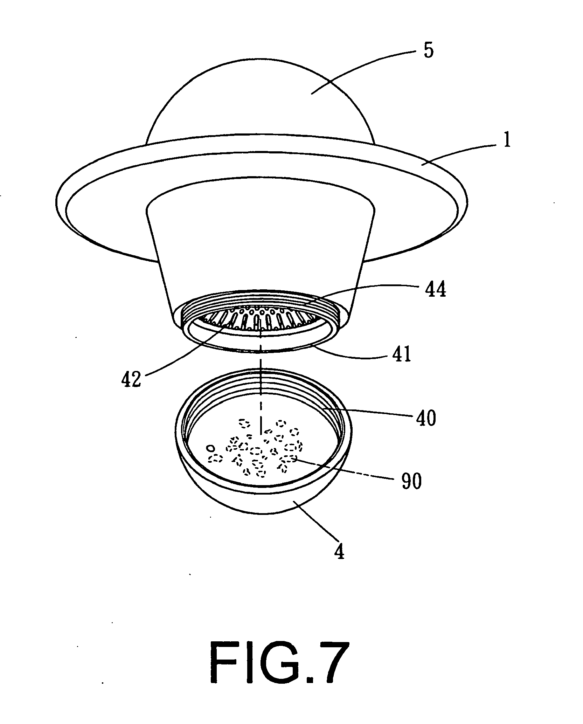

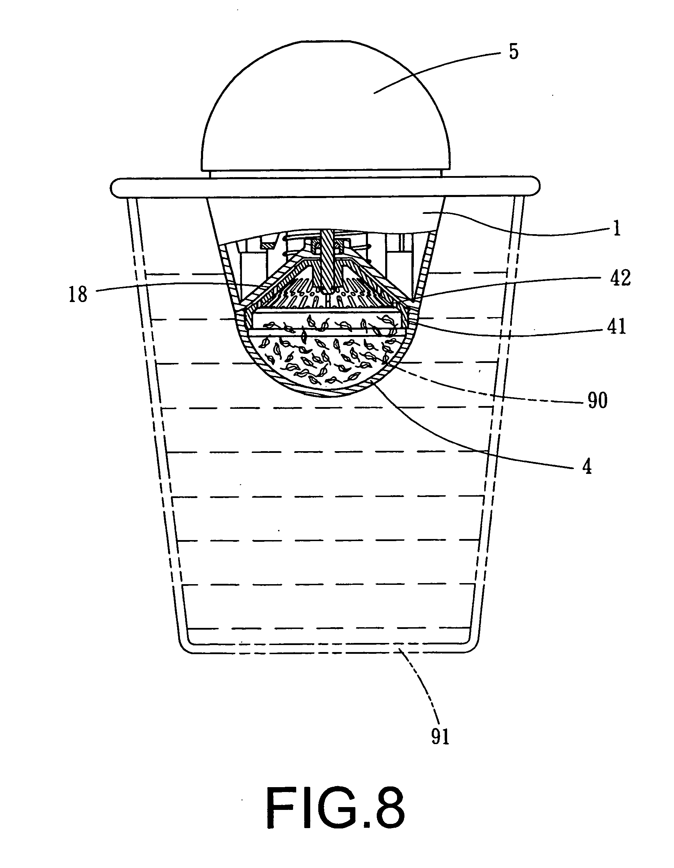

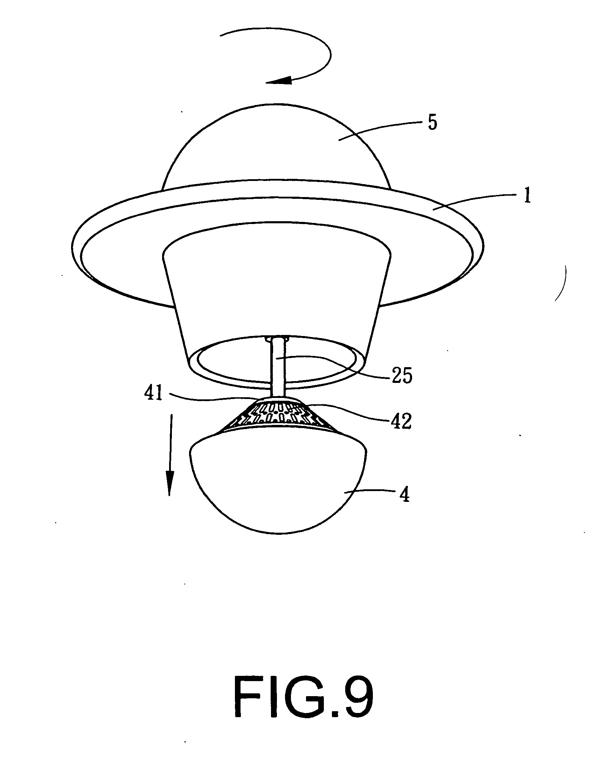

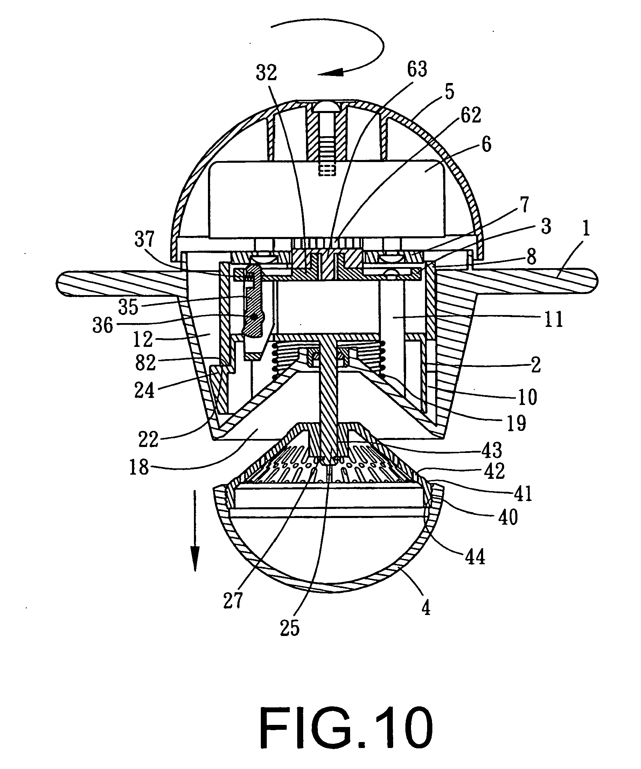

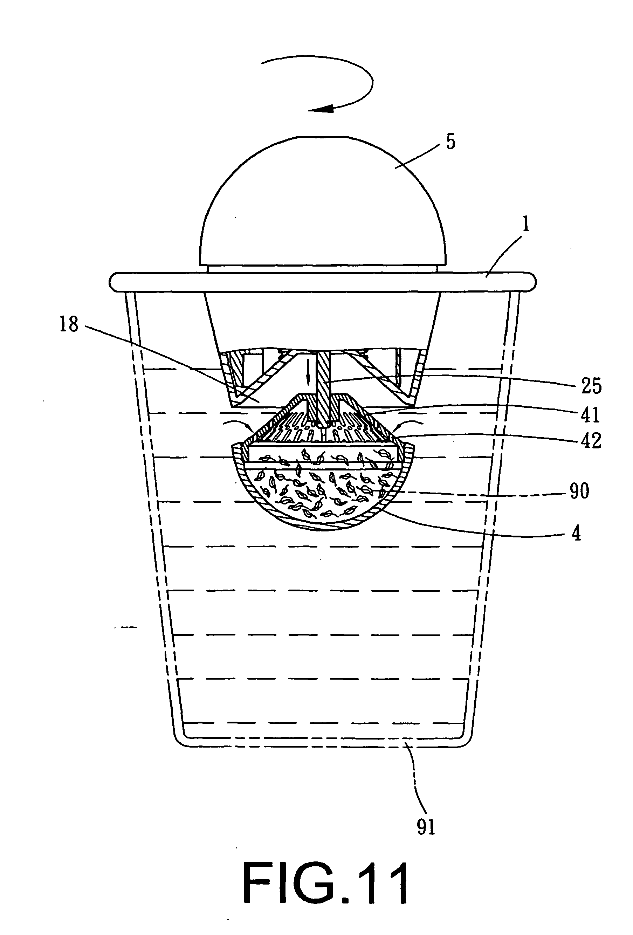

To use the tea-making device with a time control, referring to Figs.7 to 11, the cup 4 is taken off the filtering cap 41 to put an appropriate amount of tea leaves 90 (as shown in Fig.7). The cup 4 is then locked by screwing under the filtering cap 41. Pour hot water to a regular container 91; the container can be another cup, over which the tea-making device is placed, as shown in Fig.8. The bottom of the cup 4 situates in the container 91, whereby hot water will immerge the leaves 90. The upper cover 5 is twisted to set a time duration of soakage. When the upper cover 5 is being rotating, the timer 6, the driving unit 7 and the movable unit 8 will be urged to move accordingly. Since the insertion projection 63 of the timer 6 inserted in the locking mount 32 of the securing mount 3 is fixed, the sloppy surfaces 83 on the blades 82 of the movable unit 8 will shift in the opposite direction with respect to the sloppy surfaces on the projected guides 22 of the connecting mount 2. Since the connecting mount 2 is confined by the engagement between the projected portion 24 and the slot 12, the connecting mount 2 will not rotate with the movable unit 8. However, it moves up and down as pushed by the blades 82. As the driving unit 7 is driven by the upper cover 5, the driving projection 76 will push the securing block 35 within the through window 33 of the securing mount 3, consequently pushing the spring 37 aside. At the same time, the securing block 35 will rotate inwardly about the pivotal axis 36, leading to an inward shift the lower end of the securing block 35, leaving room for the connecting mount 2. When the lower edges of the blades 82 of the movable unit 8 support against the upper edges of the projected guides 22 of the connecting mount 2, the connecting mount 2 is urged by the movable unit 8 to a lowest configuration, which will compress the spring 19 below. As the connecting mount 2 is shifted downward, the driving projection 76 of the driving unit 7 will depart from the securing block 35. Therefore, the securing block 35 will be pushed no more by the spring 37, and the lower end of the securing block 35 will again move forward and tilt against the upper rim of the through window 21 of the connecting mount 2, as shown in Figs.9 and 10. Following the down shift of the connecting mount 2, its connecting rod 25 will move downward to drive the cup 4 and the filtering cap 41 downwardly, whereby the cup 4 and the filtering cap 41 will depart from the cavity 18 on the bottom side of the main body 1, and whereby hot water will flow into the cup 4 through the a multitude of through holes 42 of the filtering cap 41 as shown in Fig.11. Meanwhile, the timer 6 will be driven by the upper cover 5 to start counting time, and the movable unit 8 will move back to original configuration gradually during the counting. As the driving projection 76 of the driving unit 7 rotates back to the securing block 35 of the securing mount 3, the driving projection 76 will push the securing block 35 and compress the spring 37, whereby the lower edge of the securing block 35 will retract and leave room for the upward shift of the connecting mount 2. When the sloppy surfaces 83 of the blades 82 of the movable unit 8 rotate back to touch the sloppy top surface 23 on the projected guides 22 of the connecting mount 2, the connecting mount 2 will pushed by the lower edges of the blades 82 no more, whereby the connecting mount 2, the cup 4 and the filtering cap 41 are moving upward by spring 19, leading to the clapping together between the top surface 23 on the projected guides 22 and the sloppy surfaces 83 of the blades 82 (when the preset time is reached). The cup 4 will shift upward and close again right under the main body 1, whereby the filtering cap 41 will move within the cavity 18 at the bottom of the main body1. Therefore, the tea leaves 90 in the cup 4 will be separated from the tea soup in the container 91. Therefore, users may set their respective soakage time periods for getting their ideal teas. Further, it is very convenient to dump the tea leaves after serving the tea, simply taking the filtering cap 41 from the cup 4 and cleaning it.

## Claims

1. A tea-making device with a time control, comprising:
a main body (1) having a receptacle (10) with a lateral side provided with a slot (12); said receptacle (10) further including a central hole (14) and a spring (19) ; a bottom end of said main body being provided with a cavity (13);
a connecting mount (2) located in said receptacle (10) of said main body (1); a lateral wall of said being uniformly arranged with a plurality of projected guides (22) each having a top sloppy surface (23); one of said projected guides (22) being provided with a projected body (24); a connecting rod (25) being erected on a bottom side of said connecting mount (2);
a securing mount (3) mounted within said receptacle (10) having a locking mount (32) on a top surface of said securing mount (3);
a cup (4) below said main body (1) being covered by a filtering cap (41); said filtering cap (41) being provided with a plurality of through holes (42) and a through window (43);
an upper cover (5) disposed atop said main body (1);
a timer (6) attached within said upper cover (5) having a plurality of transmission gears (62) and an insertion projection (63);
a driving unit (7) below said timer (6) having a plurality of through holes (73); and
a movable unit (8) mounted on said driving unit (7) having a plurality of blades (82) uniformly arranged on a lateral wall thereon each having a side sloppy surface (83).

2. The tea-making device with a time control of claim 1 wherein said receptacle (10) of said main body (1) is provided with a lateral slot (12); said lateral slot (12) further comprising a water stopper (15) and an O-ring (16).

3. The tea-making device with a time control of claim 1 wherein a top surface is provided with time scales (17).

4. The tea-making device with a time control of claim 1 wherein said receptacle (10) of said main body (1) is provided with a plurality of retaining columns (11) for going through a corresponding plurality of through holes (20) formed on a top surface of said connecting mount (2); said securing mount (3) having a plurality of through holes (30) for the locking of said retaining columns (11) of said main body (1) by locking members (31).

5. The tea-making device with a time control of claim 1 wherein a top surface of said securing mount (3) is provided with a through window (33); said securing mount (3) further including a locking mount (32) formed at a bottom of said through window (33); a securing block (35) being pivotally mounted in said locking mount (32); a spring (37) being disposed within said window (33) near a top position above said securing block (35); a top surface of said connecting mount (2) being provided with a retaining hole for passing said locking mount (32); a bottom surface of said driving unit being provided with a driving projection for pushing said securing block (35).

6. The tea-making device with a time control of claim 1 wherein a bottom end of said connecting mount (2) is provided with an annular groove (26) for attaching with a retaining ring (27).

7. The tea-making device with a time control of claim 1 wherein an inner rim of said cup is provided with an inner screw thread (40), and wherein an outer rim of said filtering cap is provided with an outer screw thread (44).

8. The tea-making device with a time control of claim 1 wherein a top surface of said timer is provided with a screw thread and said upper cover is provided with a through window; a locking member (31) being extended through said through window of said upper cover and fixing said timer at a screwed hole (60) thereof; a bottom surface of said timer further including a retaining column (61), to which a locking member (31) being inserted through a through hole (73) of said driving unit (7) and then locked within said retaining hole.

9. The tea-making device with a time control of claim 1 wherein a lateral wall of said driving unit (7) is provided with a plurality of pin slots (75); a lateral wall of said movable unit is being provided with a plurality of through holes (80) for the passage of said pins, whereby said movable unit (8) will be coupled with said driving unit (7).

## Patentansprüche

1. Teezubereitungseinrichtung mit einer Zeitsteuerung, umfassend einen Hauptkörper 1, der ein Aufnahmegefäß (10) mit einer mit einem Schlitz (12) versehenen Seitenwand aufweist sowie eine Mittelbohrung (14) und eine Feder (19), wobei ein unteres Ende des Hauptkörpers mit einem Hohlraum (13) versehen ist; ein Verbindungslager (2), das in dem Aufnahmegefäß (10) des Hauptkörpers (1) angeordnet ist, wobei eine Seitenwand desselben gleichmäßig mit mehreren vorspringenden Führungen (22) versehen ist, von denen jede eine obere geneigte Oberfläche (23) aufweist, wobei ferner eine der vorspringenden Führungen (22) mit einem vorspringenden Körper (24) versehen ist und wobei ein Verbindungsstab (25) auf einer Bodenseite des Verbindungslagers (2) aufsteht; ein Befestigungselement (3), das in dem Aufnahmegefäß (10) angeordnet ist und auf einer oberen Oberfläche des Befestigungselementes ein Verriegelungslager (32) aufweist; eine Tasse (4) unter dem Hauptkörper (1), die von einer Filtertasse (41) abgedeckt wird, welche Filtertasse (41) mit mehreren Durchgangslöchern (42) versehen ist sowie einem Durchgangsfenster (43); einen oberen Deckel (5), der auf dem Hauptkörper (1) angeordnet ist; einen Zeitgeber (6), der in dem oberen Deckel (5) angebracht ist und mehrere Übertragungszahnräder (62) sowie einen Einsteckvorsprung (63) aufweist; eine Antriebseinheit (7) unter dem Zeitgeber (6), die mit mehreren Durchgangslöchern (73) versehen ist; und eine bewegliche Einheit (8), die auf der Antriebseinheit (7) angebracht ist und mehrere Flügel (82) aufweist, welche gleichmäßig auf einer Seitenwand der Antriebseinheit angeordnet sind und von denen jeder eine geneigte seitliche Oberfläche (83) besitzt.

2. Teezubereitungseinrichtung mit einer Zeitsteuerung nach Anspruch 1, **dadurch gekennzeichnet, daß** das Aufnahmegefäß (10) des Hauptkörpers (1) mit einem seitlichen Schlitz (12) versehen ist und des weiteren ein Wasserstopp (15) und ein O-Ring (16) vorgesehen sind.

3. Teezubereitungseinrichtung mit einer Zeitsteuerung nach Anspruch 1, **dadurch gekennzeichnet, daß** die obere Oberfläche mit Zeitskalen (17) versehen ist.

4. Teezubereitungseinrichtung mit einer Zeitsteuerung nach Anspruch 1, **dadurch gekennzeichnet, daß** das Aufnahmegefäß (10) des Hauptkörpers (1) mit mehreren Haltesäulen (11) ausgestattet ist, die durch eine entsprechende Anzahl Durchgangslöcher (20) greifen, welche auf der oberen Oberfläche des Verbindungslagers (2) ausgebildet sind, und daß das Befestigungselement (3) mit einer Vielzahl Durchgangslöcher (30) zur Arretierung der Haltesäulen (11) des Hauptkörpers (1) mit Hilfe von Verriegelungskörpern (31) versehen ist.

5. Teezubereitungseinrichtung mit einer Zeitsteuerung nach Anspruch 1, **dadurch gekennzeichnet, daß** eine obere Oberfläche des Befestigungselements (3) mit einem Durchgangsfenster (33) versehen ist, daß das Befestigungselement (3) des weiteren ein Verriegelungslager (32) aufweist, das am Boden des Durchgangsfensters (33) ausgebildet ist, daß ein Sicherungsblock (35) in dem Verriegelungslager (32) gelenkig angebracht ist, daß eine Feder (37) in dem Fenster (33) in der Nähe einer oberen Stelle über dem Befestigungsblock (35) angeordnet ist, daß eine obere Oberfläche des Verbindungslagers (2) mit einer Halterungsbohrung versehen ist, durch die das Verriegelungslager hindurch tritt, und daß die untere Oberfläche der Antriebseinheit mit einem Antriebsvorsprung versehen ist, der gegen den Sicherungsblock (35) drückt.

6. Teezubereitungseinrichtung mit einer Zeitsteuerung nach Anspruch 1, **dadurch gekennzeichnet, daß** ein unteres Ende des Verbindungslagers (2) mit einer Ringnut (26) zur Anbringung eines Halterungsrings (27) versehen ist.

7. Teezubereitungseinrichtung mit einer Zeitsteuerung nach Anspruch 1, **dadurch gekennzeichnet, daß** ein innerer Rand der Tasse mit einem Innengewinde (40) versehen ist und ein äußerer Rand der Filtrierhaube mit einem äußeren Schraubgewinde (44).

8. Teezubereitungseinrichtung mit einer Zeitsteuerung nach Anspruch 1, **dadurch gekennzeichnet, daß** eine obere Oberfläche des Zeitgebers mit einem Schraubgewinde versehen ist und der obere Deckel ein Durchgangsfenster aufweist, daß ein Verriegelungskörper (31) sich durch das Durchgangsfenster des oberen Deckels erstreckt und den Zeitgeber in einem Gewindeloch (60) des Deckels fixiert, und daß eine untere Oberfläche des Zeitgebers des weiteren eine Halterungssäule (61) aufweist, auf die ein Verriegelungskörper (31) durch ein Durchgangsloch (73) der Antriebseinheit (7) hindurchgesteckt und dann in dem Halterungsloch arretiert wird.

9. Teezubereitungseinrichtung mit einer Zeitsteuerung nach Anspruch 1, **dadurch gekennzeichnet, daß** eine seitliche Wand der Antriebseinheit (7) mit mehreren Zapfen (35) versehen ist und daß eine Seitenwand der beweglichen Einheit mit mehreren Durchgangslöchern (80) für den Durchgang dieser Zapfen ausgestattet ist, um **dadurch** die bewegliche Einheit (8) mit der Antriebseinheit (7) zu koppeln.

## Revendications

1. Appareil pour la préparation de thé avec contrôle de temps, comprenant :
un corps principal (1) ayant un réceptacle (10) avec un côté latéral doté d'une fente (12), ledit réceptacle (10) incluant en outre un trou central (14) et un ressort (19), une extrémité inférieure dudit corps principal étant pourvue d'une cavité (13) ;
une monture de connexion (2) située dans ledit réceptacle (10) dudit corps principal (1), une paroi latérale de ladite monture étant dotée uniformément d'une pluralité de guides en projection (22) ayant chacun une surface supérieure en pente (23), l'un desdits guides en projection (22) étant pourvu d'un corps en projection (24), et une tige de connexion (25) étant érigée sur un côté inférieur de ladite monture de connexion (2) ;
une monture de fixation (3) montée à l'intérieur dudit réceptacle (10) et ayant une monture de blocage (32) sur une surface supérieure de ladite monture de fixation (3) ;
une coupelle (4) au-dessous dudit corps principal (1) et couverte par un capuchon de filtration (41), ledit capuchon de filtration (41) étant pourvu d'une pluralité de trous traversants (42) et d'une fenêtre traversante (43) ;
un couvercle supérieur (5) disposé par-dessus ledit corps principal (1) ;
un temporisateur (6) attaché à l'intérieur dudit couvercle supérieur (5) et ayant une pluralité d'engrenages de transmission (62) et une projection d'insertion (63) ;
une unité d'entraînement (7) au-dessous dudit temporisateur (6) et ayant une pluralité de trous traversants (73) ; et
une unité mobile (8) montée sur ladite unité d'entraînement (7) et ayant une pluralité de pales (82) agencées uniformément sur une paroi latérale sur celle-ci et ayant chacune une surface latérale en pente (83).

2. Appareil pour la préparation de thé avec contrôle de temps selon la revendication 1, dans lequel ledit réceptacle (10) dudit corps principal (1) est doté d'une fente latérale (12) ; ladite fente latérale (12) comprenant en outre un clapet à eau (15) et un j oint torique (16).

3. Appareil pour la préparation de thé avec contrôle de temps selon la revendication 1, dans lequel une surface supérieure est dotée d'une échelle temporelle (17).

4. Appareil pour la préparation de thé avec contrôle de temps selon la revendication 1, dans lequel ledit réceptacle (10) dudit corps principal (1) est pourvu d'une pluralité de colonnes de retenue (11) destinées à passer à travers une pluralité correspondante de trous traversants (20) formés sur une surface supérieure de ladite monture de connexion (2), ladite monture de fixation (3) ayant une pluralité de trous traversants (30) pour le blocage desdites colonnes de retenue (11) dudit corps principal (1) par des éléments de blocage (31).

5. Appareil pour la préparation de thé avec contrôle de temps selon la revendication 1, dans lequel une surface supérieure de ladite monture de fixation (3) est dotée d'une fenêtre traversante (33), ladite monture de fixation (3) incluant en outre une monture de blocage (32) formée au niveau d'un fond de ladite fenêtre traversante (33), un bloc de fixation (35) étant monté en pivotement dans ladite monture de blocage (32), un ressort (37) étant disposé à l'intérieur de ladite fenêtre (33) à proximité d'une position supérieure au-dessus dudit bloc de fixation (35), une surface supérieure de ladite denture de connexion (2) étant dotée d'un trou de retenue pour le passage de ladite monture de blocage (32), une surface inférieure de ladite unité d'entraînement étant pourvue d'une projection d'entraînement pour pousser ledit bloc de fixation (35).

6. Appareil pour la préparation de thé avec contrôle de temps selon la revendication 1, dans lequel une extrémité inférieure de ladite monture de connexion (2) est pourvue d'une gorge annulaire (26) pour être attachée avec une bague de retenue (27).

7. Appareil pour la préparation de thé avec contrôle de temps selon la revendication 1, dans lequel un rebord intérieur de ladite coupelle est pourvu d'un pas de vis intérieur (40), et dans lequel un rebord extérieur dudit capuchon de filtration est pourvu d'un pas de vis extérieur (44).

8. Appareil pour la préparation de thé avec contrôle de temps selon la revendication 1, dans lequel une surface supérieure dudit temporisateur est pourvue d'un pas de vis et ledit couvercle supérieur est pourvu d'une fenêtre traversante, un élément de blocage (31) étant placé de manière à s'étendre à travers ladite fenêtre traversante dudit couvercle supérieur et à fixer ledit temporisateur au niveau d'un trou de vissage (60) de celui-ci, une surface inférieure dudit temporisateur incluant en outre une colonne de retenue (61), et dans lequel un élément de blocage (31) est inséré à travers un trou traversant (73) de ladite unité d'entraînement (7) puis est bloqué à l'intérieur dudit trou de retenue.

9. Appareil pour la préparation de thé avec contrôle de temps selon la revendication 1, dans lequel une paroi latérale de ladite unité d'entraînement (7) est pourvue d'une pluralité de fentes (75) à tige ; une paroi latérale de ladite unité mobile est pourvue d'une pluralité de passages traversants (80) pour le passage desdites tiges, grâce à quoi ladite unité mobile (8) est couplée avec ladite unité d'entraînement (7).
